# EUROPEAN PATENT SPECIFICATION

(11) **EP 4 484 183 B1**
(45) Date of publication and mention of the grant of the patent: **23.07.2025**
(21) Application number: 24185444.7
(22) Date of filing: 28.06.2024
(51) Int. Cl.: B60G 21/055, B60K 1/04, B62D 21/11

(54) **A ROAD VEHICLE**
STRASSENFAHRZEUG
VÉHICULE ROUTIER

(30) Priority: 29.06.2023 NL 2035222
(43) Date of publication of application: 01.01.2025
(73) Proprietor: DAF Trucks N.V., 5643 TW Eindhoven (NL)
(72) Inventor: DINGEMANS, Cornelis Petrus Adrianus, 5643 TW Eindhoven (NL); KOOT, Joannes Arnoldus, 5643 TW Eindhoven (NL)
(74) Representative: V.O.

(56) References cited:
- WO-A1-2022/084936
- WO-A1-2022/255870
- WO-A1-2022/269461
- DE-A1- 102022 128 747

## Description

The invention relates to a road vehicle according to the preamble of claim 1.

Such a road vehicle is e.g. known from WO2022/084936A1. In this known road vehicle the front hanger of the suspension system comprises an upper portion, a lower portion and an intermediate portion connecting together the upper and lower portions. The upper portion is configured to fix the front hanger to the chassis, the lower portion is configured to allow the connection of a longitudinal rod of the suspension system configured to limit longitudinal movement of the axle, and the upper portion and the lower portion comprising at least a fixation point configured to allow the fixation of the battery module. Although the known road vehicle provides a compact and economic way to allow fixation of the longitudinal rods of the suspension system and the battery module to make use of the space made available by the chassis, it has appeared that in particular with road vehicles with a relatively short wheel base there is a desire to make even more optimal us of the available space. In particular, in the known road vehicle the suspension system comprises elements such as air bellows or dampers to limit a vertical motion of the axle which reduce the available space. Other battery powered road vehicles with relevance to understand the invention are known from WO 2022/269461 A1, WO 2022/255870 A1 and DE 10 2022 128747 A1.

It is therefore an object of the invention to provide a road vehicle in which the elements of the suspension system and the battery module mounting system can be arranged in a compact and economic way.

According to the invention this object is obtained by providing a road vehicle according to claim 1. By using a battery module mounting system which comprises such front and posterior brackets not only the battery module can be received and attached in a relative easy and economic manner but also by attaching the upper end of the stabilizer rod to the lower edge of the chassis beam attachment portion of the posterior bracket and the lower end of the stabilizer rod to the connection rod a compact arrangement of the suspension system and the battery module mounting system can be achieved.

In an embodiment of a road vehicle according to the invention the upper end of the stabilizer rod is attached to the lower edge of the chassis beam attachment portion of the posterior bracket by means of a first ball joint. In a further embodiment of a road vehicle according to the invention the lower end of the stabilizer rod is indirectly attached to the axle by means of a second ball joint. Such a second ball joint can e.g. be formed by rubber silent blocks in combination with a fork mount. By using ball joints the suspension system can allow for movements of the chassis relative to the axle in all directions to a greater extent.

In another embodiment of a road vehicle according to the invention the suspension system is an air suspension system and wherein the road vehicle comprises a driving height control valve and/or a catch cable arranged between a respective elongate chassis beam and the corresponding suspension sub unit. Such a driving height control valve and/or a catch cable can be used to prevent an overstretch of the stabilizer rods in case of large relative movements between chassis and axle.

In a still further embodiment of a road vehicle according to the invention the front bracket and the front hanger are integrated in one piece so that an even more compact arrangement of the suspension system and the battery module mounting system can be achieved.

The invention will be further explained with reference to the Figures, in which non-limiting exemplary embodiments of a road vehicle according to the invention are schematically shown.
Figure 1 shows in a perspective view a portion of a relevant part of a road vehicle in an embodiment according to the invention;
Figure 2 show in a perspective view a battery module mounting system and a suspension system of a road vehicle according to an embodiment of the invention without depicting the elongate chassis beams;
Figures 3A and 3B show in a front view the battery module mounting system and the suspension system of a road vehicle as shown in Figure 2 in a first position in which the stabilizer rods are positioned vertically (Fig. 3A) and in a position in which the stabilizer rods are deflected sideways (Fig. 3B);
Figure 4 shows in a perspective view an embodiment of road vehicle according to the invention comprising a driving height control valve arranged between a respective elongate chassis beam and the suspension system; and
Figure 5 shows in a perspective view an embodiment of road vehicle according to the invention comprising a catch cable arranged between a respective elongate chassis beam and the suspension system.

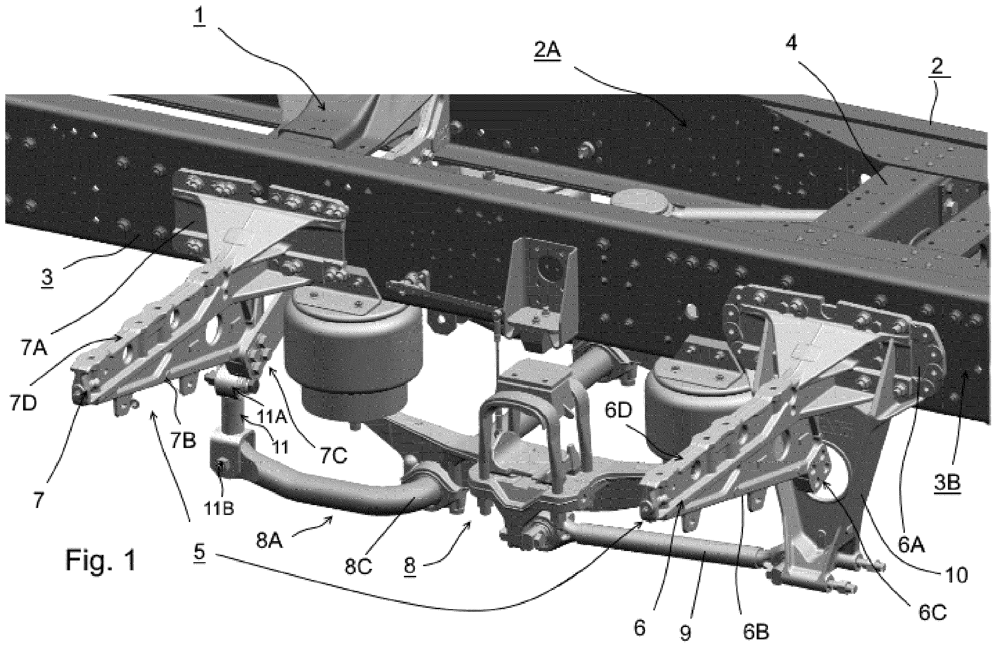

In Figure 1 the parts relevant for describing an embodiment of a road vehicle according to the invention are schematically shown in perspective. Road vehicles provided with an electric motor configured to at least partially propel the road vehicle are known in the art and a detailed description thereof is omitted here for clarity sake.

As shown in Figure the road vehicle comprises a chassis 1 comprising a first elongate chassis beam 2 and a second elongate chassis beam 3, both extending along a length of the road vehicle, and at least one cross beam 4 connecting the first elongate chassis beam 2 and the second elongate chassis beam 3. A front side of the road vehicle is situated at the right hand side of the figure, whilst a rear side of the road vehicle is situated at the left hand side of figure 1. The road vehicle further comprises a battery module mounting system 5 for mounting a battery module to the chassis 1. Each of the first and second elongate chassis beam 2, 3 comprises an inner surface (only the inner surface 2A of the first elongate chassis beam 2 being visible in Figure 1) and an outer surface (only the outer surface 3B of the second elongate chassis beam 3 being visible in Figure 1). The inner surfaces of the first and second chassis beams 2, 3 face each other while the outer surfaces of the first and second chassis beams 2, 3 face away from each other.

The battery module mounting system 5 comprises a front bracket 6 mounted to and projecting from the outer surface 3B of the second elongate chassis beam 3 and a posterior bracket 7 mounted to and projecting from the outer surface 3B of the elongate chassis beam 3. The posterior bracket 7 is spaced apart from the front bracket 6 for receiving a battery module (not shown) between the front bracket 6 and the posterior bracket 7. The battery module can be attached to the front and posterior brackets by any known means in the art.

Each of the front and posterior brackets 6, 7 is a triangularly shaped bracket comprising a chassis beam attachment portion 6A, 7A for connecting the triangularly shaped bracket 6, 7 to the outer surface 3B of the second elongate chassis beam 3. An angled portion 6B, 7B extends upwardly between a lower edge 6C, 7C of the chassis beam attachment portion 6A, 7A and an upper horizontal portion 6D, 7D of the triangularly shaped bracket 6, 7. In this manner a battery module can be arranged on the outer surface 3B of the second elongate chassis beam 3. It will be clear that another battery module can be arranged on the outer surface of the first elongate chassis beam 2, and that the invention is not restricted to the number of battery modules. For reasons of clarity it is observed that "horizontal" and "vertical" have the usual meaning referring to a normal operational mode in which the road vehicle is supported on a horizontal road surface. Further, "front" and "rear" are defined in the manner that "front" refers to the normal driving direction of the road vehicle, which as shown in Figure 1 is to the right.

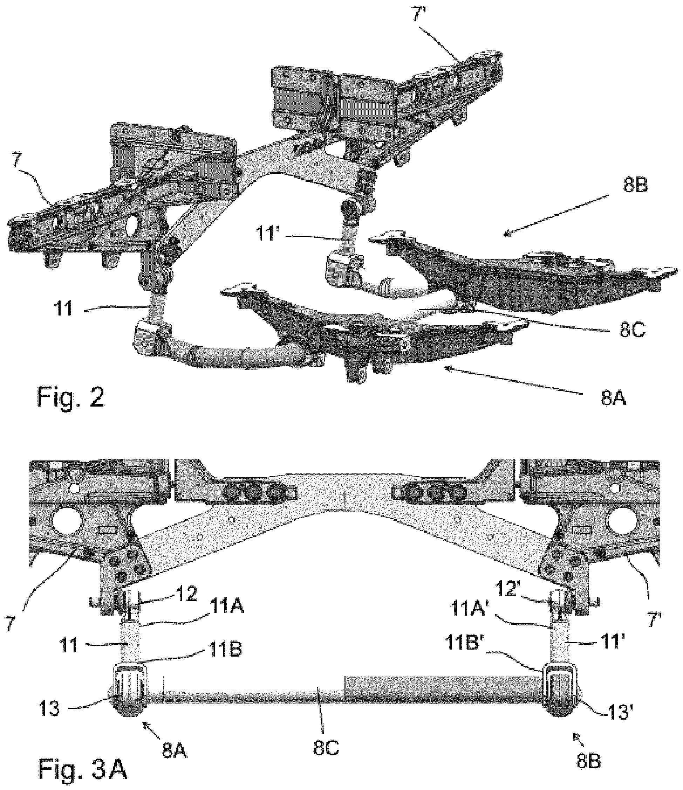

As is known per se, the road vehicle comprises a suspension system 8 connecting the chassis 1 to an axle onto which wheels (both not shown for clarity reasons) of the road vehicle are attached. The suspension system 8 comprises a first suspension sub unit 8A and a second suspension sub unit 8B (see e.g. Fig. 2) connected with each other by a connection rod 8C. As is more clearly shown in the embodiment of Figure 1 the first suspension sub unit 8 comprises a longitudinal rod 9 configured to longitudinally limit a movement of the axle. The second suspension sub unit 8B (part of which is depicted in e.g. Fig. 2) is identical to the first suspension sub unit 8A). The longitudinal rod 9 is connected to the second elongate chassis beam 3 via a front hanger 10 extending downwards from the second elongate chassis beam 3. The first suspension sub unit 8 further comprises a suspension element configured to limit a vertical movement of the axle, which suspension element according to the invention is a stabilizer rod 11 having an upper end 11A and a lower end 11B, the upper end 11A of the stabilizer rod 11 being attached to the lower edge 7C of the chassis beam attachment portion 7A of the posterior bracket 7. As shown in the embodiment of Figure 1 the front bracket 6 and the front hanger 10 are integrated in one piece so that an even more compact arrangement of the first suspension sub unit 8A and thus the suspension system 8 and the battery module mounting system 5 can be achieved. Although the stabilizer rod 10 is relatively short and thus a relatively short suspension stroke length is obtained this can, if desired and needed, be compensated by e.g. controlling the suspension parameters, such as e.g. the air pressure in an air suspension system.

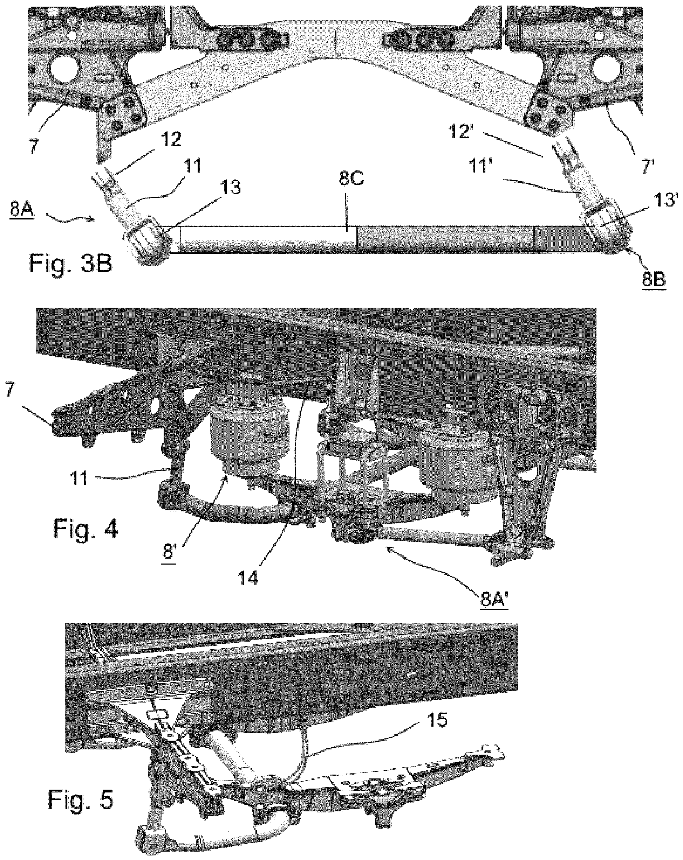

In Figures 2 and 3A/3B the posterior portion of the battery module mounting system and the suspension system 8 are shown in a perspective view and front view, respectively, depicting both suspension sub units 8A and 8B of the embodiment of Figure 1 of a road vehicle according to an embodiment of the invention without depicting the elongate chassis beams for clarity reasons. The components of the second suspension sub unit 8B are indicated with the same reference numerals as for the first suspension sub unit but an " ' " has been added.

As indicated in the embodiment shown in Figure 3A the upper end 11A, 11A' of the stabilizer rod 11, 11' is attached to the lower edge of the chassis beam attachment portion of the posterior bracket 7, 7' by means of a first ball joint 12, 12'. The lower end 11B, 11B' of the stabilizer rod 11, 11' is attached to the connection rod 8C by means of a second ball joint 13, 13'. The ball joints 12, 12'; 13, 13' provide that the suspension system 8 can allow for movements of the chassis relative to the axle in all directions to a greater extent. This is e.g. shown in Fig. 3B which depicts the situation in which during rolling of the axle the connection rod 8C winds itself leading to a difference in vertical height of the ball joints 12, 13; 12', 13' which has as result that the connection rod 8C moves sideways with regard to the chassis.

In the embodiment of a road vehicle as shown in Figure 4 the suspension system 8 is an air suspension system 8' and comprises a driving height control valve 14 arranged between a respective elongate chassis beam 3 and the corresponding suspension sub unit 8A'. The driving height control valve 14 is arranged to prevent an overstretch of the stabilizer rod 11 in case of large relative movements between chassis and axle. Please note that instead of or in addition to a height control valve a catch cable 15 can be used as shown in Fig. 5.

## Claims

1. A road vehicle comprising:
an electric motor configured to at least partially propel the road vehicle;
a battery module comprising battery packs configured to at least partially power the electric motor;
a chassis (1) comprising a first elongate chassis beam (2) and a second elongate chassis beam (3), both extending along a length of the road vehicle, each first and second elongate chassis beam comprising an inner surface (2A, 3A) and an outer surface (2B, 3B), the inner surfaces of the first and second chassis beams facing each other, the outer surfaces of the first and second chassis beams facing away from each other, wherein the battery module is arranged on an outer surface of the first or second elongate chassis beam;
a suspension system (8), the suspension system connecting the chassis to an axle onto which wheels of the vehicle are attached, the suspension system comprising a first (8A) and a second suspension sub unit (8B) each comprising a longitudinal rod (9) configured to longitudinally limit a movement of the axle and a suspension element configured to limit a vertical movement of the axle, the longitudinal rod being connected to a respective elongate chassis beam via a front hanger (10), and a connection rod (8C) connecting the first and second suspension sub unit; and
a battery module mounting system (5) for mounting the battery module to the chassis; **characterized in that** the battery module mounting system comprises:
- a front bracket (6) mounted to and projecting from the outer surface of a respective elongate chassis beam; and
- a posterior bracket (7) mounted to and projecting from the outer surface of the respective elongate chassis beam such that the posterior bracket is spaced apart from the front bracket for receiving the battery module between the front bracket and the posterior bracket; each of the brackets being a triangularly shaped bracket comprising a chassis beam attachment portion (6A, 7A) for connecting the triangularly shaped bracket to an outer surface of an elongate chassis beam, an angled portion (6B, 7B) extending upwardly between a lower edge (6C, 7C) of the chassis beam attachment portion and an upper horizontal portion (6D, 7D) of the triangularly shaped bracket; and
**in that** the suspension element configured to limit a vertical movement of the axle is a stabilizer rod (11) having an upper (11A) and a lower end (11B), the upper end of the stabilizer rod being attached to the lower edge of the chassis beam attachment portion of the posterior bracket, the lower end of the stabilizer rod being connected to the connection rod.

2. The road vehicle according to claim 1, wherein the upper end of the stabilizer rod is attached to the lower edge of the chassis beam attachment portion of the posterior bracket by means of a first ball joint (12).

3. The road vehicle according to claim 1 or 2, wherein the lower end of the stabilizer rod is attached to the connection rod by means of a second ball joint (13).

4. The road vehicle according to any one of the preceding claims, wherein the suspension system is an air suspension system (8') and wherein the road vehicle comprises a driving height control valve (14) and/or a catch cable (15) arranged between a respective elongate chassis beam and corresponding suspension sub unit.

5. The road vehicle according to any one of the preceding claims, wherein the front bracket and the front hanger are integrated in one piece.

## Patentansprüche

1. Straßenfahrzeug, umfassend:
einen Elektromotor, der so konfiguriert ist, dass er das Straßenfahrzeug zumindest teilweise antreibt;
ein Batteriemodul mit Batteriepaketen, die so konfiguriert sind, dass sie den Elektromotor zumindest teilweise mit Energie versorgen;
ein Fahrgestell (1) mit einem ersten länglichen Fahrgestellträger (2) und einem zweiten länglichen Fahrgestellträger (3), die sich beide über die Länge des Straßenfahrzeugs erstrecken, wobei jeder erste und zweite längliche Fahrgestellträger eine Innenfläche (2A, 3A) und eine Außenfläche (2B, 3B) aufweist, wobei sich die Innenflächen des ersten und des zweiten Fahrgestellträgers einander gegenüberliegen, die Außenflächen des ersten und des zweiten Fahrgestellträgers einander abgewandt sind, wobei das Batteriemodul auf einer Außenfläche des ersten oder zweiten länglichen Fahrgestellträgers angeordnet ist;
ein Aufhängungssystem (8), wobei das Aufhängungssystem das Fahrgestell mit einer Achse verbindet, an der die Räder des Fahrzeugs befestigt sind, wobei das Aufhängungssystem eine erste (8A) und eine zweite Aufhängungsuntereinheit (8B) umfasst, die jeweils eine Längsstange (9), die so konfiguriert ist, dass sie eine Bewegung der Achse in Längsrichtung begrenzt, und ein Aufhängungselement, das so konfiguriert ist, dass es eine vertikale Bewegung der Achse begrenzt, aufweisen, wobei die Längsstange über einen vorderen Aufhänger (10) mit einem entsprechenden länglichen Fahrgestellträger verbunden ist, und eine Verbindungsstange (8C), die die erste und zweite Aufhängungsuntereinheit verbindet,; und
ein Batteriemodul-Befestigungssystem (5) zum Befestigen des Batteriemoduls am Fahrgestell;
**dadurch gekennzeichnet, dass** das Batteriemodul-Befestigungssystem aufweist:
- eine vordere Halterung (6), die an der Außenfläche eines entsprechenden länglichen Fahrgestellträgers angebracht ist und von diesem vorsteht; und
- eine hintere Halterung (7), die an der Außenfläche des jeweiligen länglichen Fahrgestellträgers angebracht ist und von dieser vorsteht, so dass die hintere Halterung von der vorderen Halterung beabstandet ist, um das Batteriemodul zwischen der vorderen Halterung und der hinteren Halterung aufzunehmen;
wobei jede der Halterungen eine dreieckig geformte Halterung ist mit einem Fahrgestellträger-Befestigungsabschnitt (6A, 7A) zum Verbinden der dreieckig geformten Halterung mit einer Außenfläche eines länglichen Fahrgestellträgers, einem abgewinkelten Abschnitt (6B, 7B), der sich zwischen einer unteren Kante (6C, 7C) des Fahrgestellträger-Befestigungsabschnitts und einen oberen horizontalen Abschnitt (6D, 7D) der dreieckig geformten Halterung nach oben erstreckt; und
dass das Aufhängungselement, das so konfiguriert ist, dass es eine vertikale Bewegung der Achse begrenzt, eine Stabilisierungsstange (11) mit einem oberen (11A) und einem unteren Ende (11B) ist, wobei das obere Ende der Stabilisierungsstange an der unteren Kante des Fahrgestellträger-Befestigungsabschnitts der hinteren Halterung befestigt ist und das untere Ende der Stabilisierungsstange mit der Verbindungsstange verbunden ist.

2. Straßenfahrzeug nach Anspruch 1, wobei das obere Ende der Stabilisierungsstange mittels eines ersten Kugelgelenks (12) an der Unterkante des Fahrgestellträger-Befestigungsabschnitts der hinteren Halterung befestigt ist.

3. Straßenfahrzeug nach Anspruch 1 oder 2, wobei das untere Ende der Stabilisierungsstange über ein zweites Kugelgelenk (13) an der Verbindungsstange befestigt ist.

4. Straßenfahrzeug nach einem der vorhergehenden Ansprüche, wobei das Aufhängungssystem ein Luftaufhängungssystem (8') ist und wobei das Straßenfahrzeug ein Fahrhöhenregelventil (14) und/oder ein Fangseil (15) umfasst, das zwischen einem jeweiligen länglichen Fahrgestellträger und einer entsprechenden Aufhängungsuntereinheit angeordnet ist.

5. Straßenfahrzeug nach einem der vorhergehenden Ansprüche, wobei die vordere Halterung und der vordere Aufhänger in einem Stück integriert sind.

## Revendications

1. Véhicule routier, comprenant :
un moteur électrique configuré pour propulser au moins partiellement le véhicule routier ;
un module de batterie comprenant des blocs batterie configurés pour alimenter au moins partiellement le moteur électrique ;
un châssis (1) comprenant une première poutre de châssis allongée (2) et une seconde poutre de châssis allongée (3), toutes deux s'étendant le long d'une longueur du véhicule routier, chaque première et seconde poutres de châssis allongées comprenant une surface intérieure (2A, 3A) et une surface extérieure (2B, 3B), les surfaces intérieures des première et seconde poutres de châssis étant orientées l'une vers l'autre, les surfaces extérieures des première et seconde poutres de châssis étant orientées à l'opposé l'une de l'autre, dans lequel le module de batterie est agencé sur une surface extérieure de la première ou seconde poutre de châssis allongée ;
un système de suspension (8), le système de suspension reliant le châssis à un essieu sur lequel les roues du véhicule sont fixées, le système de suspension comprenant une première (8A) et une seconde sous-unité de suspension (8B) comprenant chacune une tige longitudinale (9) configurée pour limiter longitudinalement un mouvement de l'essieu et un élément de suspension configuré pour limiter un mouvement vertical de l'essieu, la tige longitudinale étant connectée à une poutre de châssis allongée respective via un dispositif de suspension avant (10), et une tige de connexion (8C) connectant la première et la seconde sous-unité de suspension ; et
un système de montage de module de batterie (5) pour monter le module de batterie sur le châssis ; **caractérisé en ce que** le système de montage de module de batterie comprend :
- un support avant (6) monté sur et faisant saillie à partir de la surface extérieure d'une poutre de châssis allongée respective ; et
- un support postérieur (7) monté sur et faisant saillie à partir de la surface extérieure de la poutre de châssis allongée respective de telle sorte que le support postérieur soit espacé du support avant pour recevoir le module de batterie entre le support avant et le support postérieur ; chacun des supports étant un support de forme triangulaire comprenant une partie de fixation de poutre de châssis (6A, 7A) pour connecter le support de forme triangulaire à une surface extérieure d'une poutre de châssis allongée, une partie inclinée (6B, 7B) s'étendant vers le haut entre un bord inférieur (6C, 7C) de la partie de fixation de poutre de châssis et une partie horizontale supérieure (6D, 7D) du support de forme triangulaire ; et
**en ce que** l'élément de suspension configuré pour limiter un mouvement vertical de l'essieu est une tige de stabilisation (11) présentant une extrémité supérieure (11A) et une extrémité inférieure (11B), l'extrémité supérieure de la tige de stabilisation étant fixée au bord inférieur de la partie de fixation de poutre de châssis du support postérieur, l'extrémité inférieure de la tige de stabilisation étant connectée à la tige de connexion.

2. Véhicule routier selon la revendication 1, dans lequel l'extrémité supérieure de la tige de stabilisation est fixée au bord inférieur de la partie de fixation de poutre de châssis du support postérieur au moyen d'une première articulation à rotule (12).

3. Véhicule routier selon la revendication 1 ou 2, dans lequel l'extrémité inférieure de la tige stabilisatrice est fixée à la tige de connexion au moyen d'une seconde articulation à rotule (13).

4. Véhicule routier selon l'une quelconque des revendications précédentes, dans lequel le système de suspension est un système de suspension pneumatique (8') et dans lequel le véhicule routier comprend une vanne de commande de hauteur de conduite (14) et/ou un câble d'arrêt (15) agencé(e) entre une poutre de châssis allongée respective et une sous-unité de suspension correspondante.

5. Véhicule routier selon l'une quelconque des revendications précédentes, dans lequel le support avant et le dispositif de suspension avant sont intégrés en une seule pièce.
